# EUROPÄISCHE PATENTSCHRIFT

(11) **EP 2 145 739 B1**
(45) Veröffentlichungstag und Bekanntmachung des Hinweises auf die Patenterteilung: **23.02.2011**
(21) Anmeldenummer: 08012849.9
(22) Anmeldetag: 16.07.2008
(51) Int. Cl.: B25J 19/00

(54) **Industrieroboter mit einem Datenerfassungsmodul für drahtlose Kommunikation und Verfahren zum Betrieb eines solchen**
Industrial robot with a data capture module for wireless communication and method for operating same
Robot industriel avec un module de capture de données pour communication sans fil et procédé de fonctionnement d'un tel robot

(43) Veröffentlichungstag der Anmeldung: 20.01.2010
(73) Patentinhaber: Siemens Aktiengesellschaft, 80333 München (DE)
(72) Erfinder: Graf, Rene, Dr., 92224 Amberg (DE)

(56) Entgegenhaltungen:
- EP-A- 1 591 210
- DE-A1- 10 358 764
- DE-A1-102004 054 749
- GB-A- 2 311 171
- US-A1- 2007 278 997

## Beschreibung

Die Erfindung betrifft einen Industrieroboter gemäß dem Oberbegrifff des Anspruchs 1 mit einem Roboterarm und einem Datenerfassungsmodul. Die Erfindung betrifft auch ein Verfahren gemäß dem Oberbegrifff des Anspruchs 10 zum Betrieb eines solchen Industrieroboters.

Ein solcher Roboter ist z.B. aus der EP-A- 1 591 210 bekannt.

Aus der DE 10 2006 009 979 A1 ist eine Einrichtung zur drahtlosen Kommunikation mit einem Feldgerät bekannt. In der industriellen Automatisierung besteht der Trend, zunehmend drahtlose Kommunikation in Automatisierungsnetzwerken einzusetzen. Der Wegfall der Verdrahtung bei prozessnahen Automatisierungskomponenten führt nämlich zu einer erheblichen Aufwandsersparnis beim Aufbau einer prozesstechnischen Anlage. Ein zentrales Problem bei der drahtlosen Anbindung von Sensoren und Datenmodulen besteht aber in der Bereitstellung einer autarken Energieversorgung, da eine Verkabelung zur Energieversorgung den Vorteil des Wegfalls der Datenleitungen erheblich mindern würde. Die DE 10 2006 009 979 A1 schlägt die Verwendung eines Funkmoduls vor, bei dem ein Batteriespeicher durch eine Energiemanagementeinheit lebensdauerverlängernd betrieben wird.

Die DE 10 2006 030 834 A1 offenbart ein Sensorsystem zur Überwachung von Bearbeitungsvorgängen bei Werkzeugmaschinen. Für solche Sensorsysteme ist es wichtig, dass seine Messeinrichtungen in der Nähe des Bearbeitungswerkzeuges montiert sind, um relevante Messgrößen des Bearbeitungsvorgangs aufnehmen zu können. Ein Problem stellt dabei die Energieversorgung dar. Eine Energieversorgung über Kabel ist ungünstig, wenn die Messeinrichtung auf einem schnell beweglichen Teil der Werkzeugmaschine, wie einer Werkzeugspindel, montiert ist. Zur Lösung wird z.B. in der DE 101 63 734 A1 vorgeschlagen, eine drahtlose Energieversorgung nach dem Prinzip eines Transformators zu verwenden, wobei Energie drahtlos von einer Primärspule zu einer Sekundärspule übertragen wird. Die DE 10 2006 030 834 A1 schlägt demgegenüber vor, zwei Energieversorgungssysteme zu verwenden, wobei das eine drahtlos Energie aus einem umgebenden elektromagnetischen Feld aufnimmt, während das andere batteriebetrieben ist.

In der Dissertation "Energiewandlersysteme für den Betrieb von autarken Sensoren in Fahrzeugen", Gunther Naumann, Technische Universität Dresden, 04.07.2003 werden Lösungen für autarke Energieversorgung mittels mechanisch-elektrischer Wandler in Fahrzeugen untersucht. Die starke Zunahme von elektronischen Systemen in Fahrzeugen und damit von Sensoren führt auf den Bedarf, Kabel zu Verminderung von Gewicht und Kosten und Erhöhung der Zuverlässigkeit einzusparen. Die Bewegung von Fahrzeugen kann für eine autarke Energieversorgung dieser Sensoren dienen. Es werden rotatorisch und translatorisch arbeitende Wandler untersucht.

Der Erfindung liegt die Aufgabe zugrunde, einen Industrieroboter anzugeben, der ein wartungsarmes, leicht und kostengünstig zu installierendes Kommunikationssystem aufweist. Weitere Aufgabe der Erfindung ist die Angabe eines entsprechenden Verfahrens zum Betrieb eines Industrieroboters.

Die Aufgabe wird erfindungsgemäß gelöst durch einen Industrieroboter gemäß Anspruch 1.

Bei Industrierobotern gibt es spezielle Bedingungen innerhalb der oben erwähnten Automatisierungstechnik. Ihre komplexen, frei definierbaren Bewegungen und ein häufig besonders hoher Grad an elektromagnetischem Strahlungsuntergrund, z.B. bei Schweißrobotern aber auch durch die Antriebstechnik der Roboter erfordern besondere Maßnahmen für eine Kommunikationstechnik. Diese Technik ist zumindest teilweise am Ende eines Roboterarms installiert, um die durchgeführten Arbeitsschritte mit Sensoren zu steuern oder zu überwachen und die dazu erforderlichen Daten zu übertragen. Aufgrund der Antriebstechnik der Robotermotorik liegt bereits eine Verkabelung vor, so dass eine kabellose Kommunikationstechnik kaum Vorteile zu versprechen und gleichzeitig aufgrund des hohen Rauschuntergrundes und der zusätzlich ständig wechselnden Position der am arbeitenden Roboterarm angeordneten Kommunikations- und Messmodule besonders problematisch zu sein scheint.

Die Erfindung geht aber von der Erkenntnis aus, dass eine kabellose Kommunikationstechnik doch erhebliche Vorteile bieten kann, da die Kabel aufgrund der Roboterbewegungen besonderen Belastungen und damit einer erhöhten Anfälligkeit und Wartungsaufwand unterliegen. Dabei stellt die Erfindung für diesen speziellen Anwendungsfall einen besonders geeigneten Energiespeicher für einen autarken Betrieb der Kommunikationstechnik bereit, der die Bewegung des Roboters ausnutzt und damit prinzipiell über die ganze Lebensdauer des Roboters bestehen bleibt. Der auf einer mechanisch-elektrischen Wandlung basierende Energiespeicher bietet aber auch größere Energiedichten als etwa eine Energieaufnahme aus einem umgebenden elektrischen Feld und damit die Möglichkeit zu Sendeleistungen, die die Problematik eines hohen Rauschuntergrundes, der wechselnden Position und daraus folgenden möglichen Abschirmeffekten überwinden.

Bevorzugtermaßen wandelt die Wandlereinheit translatorische Bewegung in elektrische Energie. Vorzugsweise wandelt die Wandlereinheit rotatorische Bewegung in elektrische Energie. Weiter bevorzugt wandelt die Wandlereinheit rotatorische und translatorische Bewegung in elektrische Energie. Die Wandlereinheit kann also auf überwiegende Bewegungsabläufe des Roboters so angepasst ausgestaltet werden, dass sie einen besonders hohen Wirkungsgrad erreicht.

Vorzugsweise weist das Datenerfassungsmodul einen Energiespeicher auf, in dem die erzeugte elektrische Energie speicherbar ist. Die Energie wird also nicht (nur) direkt zur Kommunikation oder zu Messaufgaben verwendet sondern, soweit überschüssig, in einem Energiespeicher, z.B. einem Akkumulator, gespeichert.

Bevorzugtermaßen kommuniziert das Datenerfassungsmodul mittels eines Industrial W-LAN-Kommunikationsstandards, mittels eines Bluetooth-Kommunikationsstandards oder mittels eines ZigBee-Kommunikationsstandards.

Bevorzugt ist das Datenerfassungsmodul an einer Position maximaler durchschnittlicher Bewegung des Roboterarms angeordnet.

Die auf Angabe eines Verfahrens gerichtete Aufgabe wird gelöst durch ein Verfahren gemäß Anspruch 10.

Die Vorteile dieses Verfahrens entsprechen den Ausführungen zu den Vorteilen des Industrieroboters.

Die Erfindung wird anhand der Zeichnung mit einem Ausführungsbeispiel näher erläutert. Es zeigen schematisch und nicht maßstäblich:
- FIG 1: Einen Industrieroboter
- FIG 2: Ein Datenerfassungsmodul mit einer translatorischen Wandlereinheit.
- FIG 3: Eine rotatorische Wandlereinheit.

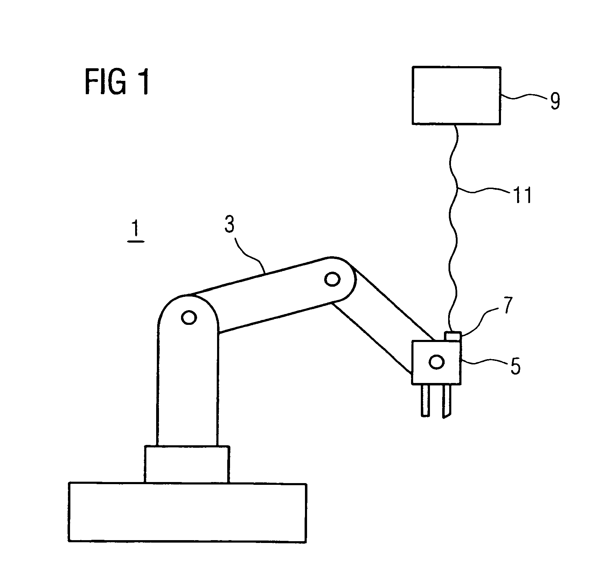

FIG 1 zeigt einen Industrieroboter 1. Der Industrieroboter 1 weist einen mehrachsig beweglichen Roboterarm 3 auf. Am Ende des Roboterarms 3 ist ein Arbeitskopf 5 angeordnet, mit dem Arbeitsschritte, z.B. ein Punktschweißen an einem nicht dargestellten Bauteil, durchführbar sind. Am Arbeitskopf 5 ist ein Datenerfassungsmodul 7 angeordnet. Das Datenerfassungsmodul 7 kommuniziert auf einem drahtlosen Kommunikationsweg 11 mit einem Leitsystem 9.

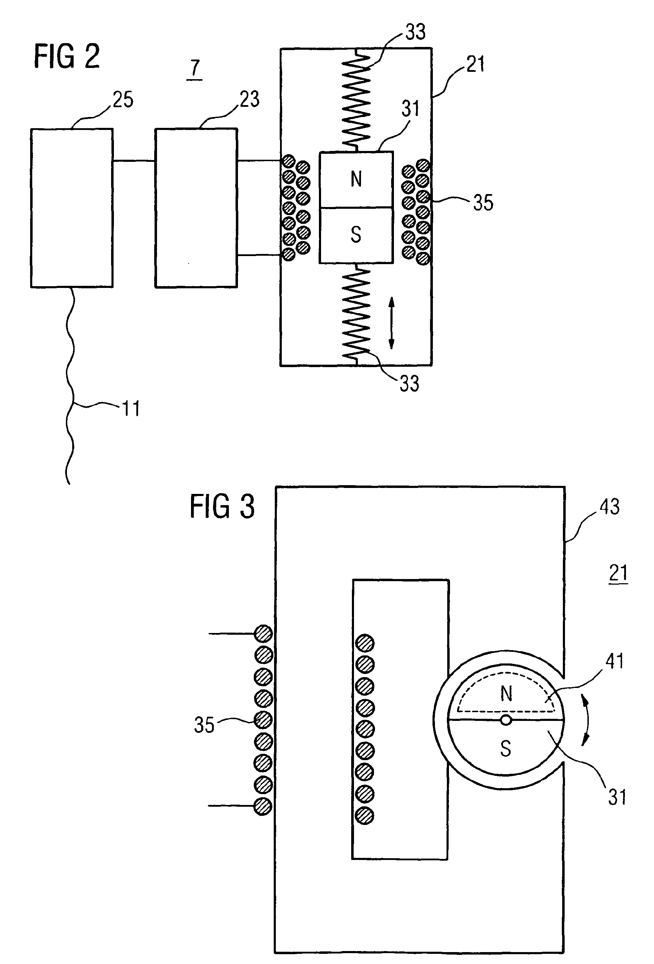

Im Betrieb des Roboters 1 durchläuft dieser programmierte Arbeitsschritte. Dazu werden über nicht näher dargestellte Sensoren, z.B. Abstandssensoren oder eine Videokamera, Parameter überwacht, die z.B. die genaue Positionierung des Arbeitskopfes ermöglichen. Die Sensordaten werden über das Datenerfassungsmodul 7 an das Leitsystem 9 drahtlos übermittelt. Das Datenerfassungsmodul weist einen autarken Energiespeicher auf, wie anhand von den Figuren 2 und 3 näher erläutert.

FIG 2 zeigt ein Datenerfassungsmodul 7 mit einer translatorischen Wandlereinheit 21, die mit einem Energiespeicher 23 verbunden ist. Der Energiespeicher 23 ist wiederum mit einer Kommunikationseinheit 25 verbunden, durch die die drahtlose Kommunikation ermöglicht wird. Die Wandlereinheit 21 weist einen Permanentmagneten 31 auf, der entlang seiner Längsachse zwischen zwei Federn 33 aufgehängt ist. Der Magnet 31 ist in einer elektrischen Spule 35 angeordnet. Eine translatorische Bewegung führt zu einer Schwingung des Magneten 31 und damit zur Induktion einer elektrischen Spannung in der Spule 35. Diese Spannung lädt den Energiespeicher 23 und stellt elektrische Energie für die Kommunikationseinheit 25 bereit. Im Vergleich zu anderen Methoden der autarken Energieversorgung von drahtlosen Systemen bietet diese Energiequelle eine hohe Energiedichte und ermöglicht damit vergleichsweise hohe Sendeleistungen.

FIG 3 zeigt eine Wandlereinheit 21, die rotatorische Bewegungen umsetzt. Dazu ist ein Magnet 31 drehend auf einer bezüglich der Drehachse eine Unwucht aufweisenden Halbscheibe 41 angeordnet. Der Magnet ist innerhalb eines Weicheisenjoches 43 angeordnet, auf dessen gegenüberliegenden Schenkel eine Spule 35 aufgewickelt ist. Rotationsbewegungen des Roboterarms 3 führen zu einer Rotation des Magneten 31 und damit zu einem Magnetfluss im Joch 43. Dies induziert wiederum eine elektrische Spannung in der Spule 35, die wie oben beschrieben die elektrische Energie für das Datenerfassungsmodul 7 bereit stellt. Auch mit diesem Wandler sind hohe Energiedichten erreichbar.

## Patentansprüche

1. Industrieroboter (1) mit einem Roboterarm (3) und einem mit dem Roboterarm (3) verbundenen Datenerfassungsmodul (7), welches für eine drahtlose Kommunikation ausgelegt ist und eine autarke Energieversorgung aufweist, **dadurch gekennzeichnet, dass** das Datenerfassungsmodul (7) zur autarken Energieversorgung eine Wandlereinheit (21) aufweist, mittels derer mechanische in elektrische Energie umwandelbar ist, wobei hierzu die Energie aus der Bewegung des Roboterarms (3) ausgenutzt wird.

2. Industrieroboter (1) nach Anspruch 1, bei dem die Wandlereinheit (21) translatorische Bewegung in elektrische Energie wandelt.

3. Industrieroboter (1) nach Anspruch 1, bei dem die Wandlereinheit (21) rotatorische Bewegung in elektrische Energie wandelt.

4. Industrieroboter (1) nach Anspruch 1, bei dem die Wandlereinheit (21) rotatorische und translatorische Bewegung in elektrische Energie wandelt.

5. Industrieroboter (1) nach einem der vorhergehenden Ansprüche, bei dem das Datenerfassungsmodul (7) einen Energiespeicher (23) aufweist, in dem die erzeugte elektrische Energie speicherbar ist.

6. Industrieroboter (1) nach einem der vorhergehenden Ansprüche, bei dem das Datenerfassungsmodul (7) mittels eines Industrial W-LAN-Kommunikationsstandards kommuniziert.

7. Industrieroboter (1) nach einem der vorhergehenden Ansprüche, bei dem das Datenerfassungsmodul (7) mittels eines Bluetooth-Kommunikationsstandards kommuniziert.

8. Industrieroboter (1) nach einem der vorhergehenden Ansprüche, bei dem das Datenerfassungsmodul (7) mittels eines ZigBee-Kommunikationsstandards kommuniziert.

9. Industrieroboter (1) nach einem der vorhergehenden Ansprüche, bei dem das Datenerfassungsmodul (7) an einer Position maximaler durchschnittlicher Bewegung des Roboterarms (3) angeordnet ist.

10. Verfahren zum Betrieb eines Industrieroboters (1) mit einem Roboterarm 3 und einem mit dem Roboterarm (3) verbundenen Datenerfassungsmodul (7), welches für eine drahtlose Kommunikation ausgelegt ist und eine autarke Energieversorgung aufweist, **dadurch gekennzeichnet, dass** das Datenerfassungsmodul (7) zur autarken Energieversorgung eine Wandlereinheit (21) aufweist, mittels derer mechanische in elektrische Energie umgewandelt wird, wobei hierzu die Energie aus der Bewegung des Roboterarms (3) ausgenutzt wird.

## Claims

1. Industrial robot (1) with a robotic arm (3) and a data recording module (7) connected to the robotic arm (3), which is designed for a wireless communication and comprises a self-sufficient power supply, **characterised in that** for a self-sufficient power supply the data recording module (7) comprises a converter unit (21), by means of which mechanical energy can be converted into electrical energy, with the energy from the movement of the robotic arm (3) being used herefor.

2. Industrial robot (1) according to claim 1, in which the converter unit (21) converts a translational movement into electrical energy.

3. Industrial robot (1) according to claim 1, in which the converter unit (21) converts a rotational movement into electrical energy.

4. Industrial robot (1) according to claim 1, in which the converter unit (21) converts a rotational and translational movement into electrical energy.

5. Industrial robot (1) according to one of the preceding claims, in which the data recording module (7) has an energy storage device (23), in which the generated electrical energy can be stored.

6. Industrial robot (1) according to one of the preceding claims, in which the data recording module (7) communicates by means of an industrial W-LAN communication standard.

7. Industrial robot (1) according to one of the preceding claims, in which the data recording module (7) communicates by means of a Bluetooth communication standard.

8. Industrial robot (1) according to one of the preceding claims, in which the data recording module (7) communicates by means of a ZigBee communication standard.

9. Industrial robot (1) according to one of the preceding claims, in which the data recording module (7) is arranged at a position of maximum average movement of the robotic arm (3).

10. Method for operating an industrial robot (1) with a robotic arm (3) and a data recording module (7) connected to the robotic arm (3), which is designed for a wireless communication and comprises a self-sufficient power supply, **characterised in that** for a self-sufficient power supply the data recording module (7) comprises a converter unit (21), by means of which mechanical energy is converted into electrical energy, with the energy from the movement of the robotic arm (3) being used herefor.

## Revendications

1. Robot ( 1 ) industriel ayant un bras ( 3 ) de robot et un module ( 7 ) d'acquisition de données relié au bras ( 3 ) de robot et conçu pour une communication sans fil et ayant une alimentation autonome en énergie, **caractérisé en ce que** le module ( 7 ) d'acquisition de données comporte pour l'alimentation autonome en énergie une unité ( 21 ) de conversion au moyen de laquelle de l'énergie mécanique peut être transformée en énergie électrique, l'énergie du déplacement du bras ( 3 ) du robot étant utilisée à cet effet.

2. Robot ( 1 ) industriel suivant la revendication 1, dans lequel l'unité de conversion transforme un mouvement de translation en énergie électrique.

3. Robot ( 1 ) industriel suivant la revendication 1, dans lequel l'unité ( 21 ) de conversion transforme un mouvement de rotation en énergie électrique.

4. Robot ( 1 ) industriel suivant la revendication 1, dans lequel l'unité ( 21 ) de conversion transforme un mouvement de rotation et de translation en énergie électrique.

5. Robot ( 1 ) industriel suivant l'une des revendications précédentes, dans lequel le module ( 7 ) d'acquisition de données a un accumulateur ( 23 ) d'énergie, dans lequel l'énergie électrique produite peut être accumulée.

6. Robot ( 1 ) industriel suivant l'une des revendications précédentes, dans lequel le module ( 7 ) d'acquisition de données communique au moyen d'un standard de communication industrielle W-LAN.

7. Robot ( 1 ) industriel suivant l'une des revendications précédentes, dans lequel le module (7) d'acquisition de données communique au moyen d'un standard de communication bluetooth.

8. Robot ( 1 ) industriel suivant l'une des revendications précédentes, dans lequel le module ( 7 ) d'acquisition de données communique au moyen d'un standard de communication zigbee.

9. Robot ( 1 ) industriel suivant l'une des revendications précédentes, dans lequel le module ( 7 ) d'acquisition de données est disposé en une position de déplacement moyen maximum du bras ( 3 ) de robot.

10. Procédé pour faire fonctionner un robot ( 1 ) industriel ayant un bras ( 3 ) de robot et un module ( 7 ) d'acquisition de données relié au bras ( 3 ) de robot et conçu pour une communication sans fil et ayant une alimentation autonome en énergie, **caractérisé en ce que** le module ( 7 ) d'acquisition de données comporte pour l'alimentation autonome en énergie une unité ( 21 ) de conversion au moyen de laquelle de l'énergie mécanique peut être transformée en énergie électrique, l'énergie du déplacement du bras (3) du robot étant utilisée à cet effet.
